# EUROPEAN PATENT APPLICATION

(11) **EP 4 530 232 A1**
(43) Date of publication of application: **02.04.2025**
(21) Application number: 24752330.1
(22) Date of filing: 04.06.2024
(51) Int. Cl.: B65G 47/31, B65G 43/08, B65G 39/04, B65G 13/02, B65G 13/12, F27D 3/00

(54) **TRANSFER DEVICE AND ELECTRODE MATERIAL HEAT TREATMENT DEVICE INCLUDING SAME**

(30) Priority: 11.07.2023 KR 20230089758
(71) Applicant: Hanwha Momentum Corporation, Seongnam-si, Gyeonggi-do 13488 (KR)
(72) Inventor: CHUNG, Min Su, Seoul 04541 (KR); KANG, Tae Ho, Seoul 04541 (KR); LEE, Sung Mun, Seoul 04541 (KR)
(74) Representative: Gulde & Partner
(86) International application number: PCT/KR2024/007609
(87) International publication number: WO 2025/014096

(57) **Abstract**

Provided is a transfer apparatus including a first transfer unit including a plurality of first rollers and a first driving apparatus configured to drive the plurality of first rollers and into which a plurality of objects are introduced, a second transfer unit including a plurality of second rollers, a plurality of alignment areas formed on the plurality of second rollers in the same number as the plurality of objects, and a plurality of second driving apparatuses configured to drive the plurality of second rollers, and a third transfer unit including a plurality of third rollers and a third driving apparatus configured to drive the plurality of third rollers, and discharging the plurality of objects, wherein the second transfer unit individually controls rotational speeds of the plurality of second rollers by using the plurality of second driving apparatuses, thereby individually controlling the transfer speeds of the plurality of objects transferred in the plurality of alignment areas.

## Description

### Technical Field

The present disclosure relates to a transfer apparatus and an electrode material heat treatment apparatus including the same.

### Background Art

A heat treatment furnace, such as an electrode material heat treatment apparatus, is a device that applies high-temperature heat to metal or non-metallic materials to improve physical properties thereof. The heat treatment furnace is divided into a roller hearth-type heat treatment furnace and a batch-type heat treatment furnace depending on a method of moving materials and is used in a sintering process of various materials, such as a sintering process of secondary battery materials.

In the heat treatment furnace, materials are transported in containers, such as saggers. As the size of the heat treatment furnace increases, the containers may meander while transporting the materials. The meandering containers may become entangled with each other at the exit side of the heat treatment furnace, causing a bottleneck or damaging containers and materials contained in the containers.

The above-described information disclosed in the background technology of this invention is only intended to improve understanding of the background of the present disclosure. Therefore, the above-described information may include information that does not constitute prior art.

### Disclosure

### Technical Problem

A transfer apparatus may be provided to individually control the speed of transfer rollers for each zone so that objects are transferred without meandering.

However, embodiments of the present disclosure are not limited to those mentioned above, and other embodiments can be clearly understood by those skilled in the art from the description of the invention below.

### Technical Solution

A transfer apparatus according to an embodiment of the present disclosure includes a first transfer unit including a plurality of first rollers and a first driving apparatus configured to drive the plurality of first rollers and into which a plurality of objects are introduced, a second transfer unit including a plurality of second rollers, a plurality of alignment areas formed on the plurality of second rollers in the same number as the plurality of objects, and a plurality of second driving apparatuses configured to drive the plurality of second rollers, and a third transfer unit including a plurality of third rollers and a third driving apparatus configured to drive the plurality of third rollers and discharging the plurality of objects, wherein the second transfer unit individually controls rotational speeds of the plurality of second rollers by using the plurality of second driving apparatuses, thereby individually controlling the transfer speeds of the plurality of objects transferred in the plurality of alignment areas.

The second transfer unit includes a plurality of first sensors and a plurality of second sensors, located in the plurality of alignment areas, respectively, in a first direction, and when the second sensor in one of the alignment areas detects the object, the second transfer unit may increase the rotational speeds of the plurality of second rollers in the other alignment areas where the first sensors detect the objects and the second sensors do not detect the objects.

When the second sensor in the alignment area corresponding to the plurality of second rollers with increased rotational speed detects the object, the second transfer unit may lower the rotational speed of the plurality of second rollers in the alignment area.

The plurality of second rollers may operate independently from the first driving apparatus of the first transfer unit.

Each second roller included in the plurality of alignment areas includes a pair of rotating members and a diameter of an outer rotating member may be less than a diameter of an inner rotating member among the pair of rotating members.

The third transfer unit includes a first stage that has some of the plurality of third rollers and can be raised and lowered, a second stage that has others of the plurality of third rollers and can be raised and lowered, a fourth sensor on the first stage adjacent to the boundary between the first stage and the second stage, and a fifth sensor on the second stage, wherein the first stage may be located between the second transfer unit and the second stage.

When the fifth sensor detects the object and the fourth sensor does not detect the object, the third transfer unit may raise the second stage after a set time.

When the fourth sensor and the fifth sensor simultaneously detect the object, the third transfer unit may raise the first stage and the second stage after a set time.

The third transfer unit further includes centering apparatuses on both sides of the plurality of third rollers, wherein the centering apparatuses may press the object in a direction crossing a transfer direction of the object.

An electrode material heat treatment apparatus includes a plurality of areas through which objects sequentially pass, wherein the plurality of areas include a preheating area configured to preheat the objects, a heating area located behind the preheating area and configured to heat the objects to a set temperature, a maintaining area located behind the heating area and configured to maintain a temperature corresponding to the heating area, a cooling area located behind the maintaining area and configured to cool the objects, and an alignment area located behind the cooling area and configured to align the objects, wherein the alignment area may include the above-mentioned transfer apparatus.

However, the effects that can be obtained through the present disclosure are not limited to the above-described effects and other technical effects not mentioned can be clearly understood by those skilled in the art from the description of the invention described below.

### Advantageous Effects

A transfer apparatus and an electrode material heat treatment apparatus may enable a plurality of objects to be transferred without meandering by individually controlling the rotational speed of a plurality of rollers transferring the plurality of objects.

### Description of Drawings

The following drawings attached to this specification illustrate embodiments of the present disclosure and help understand the technical idea of the present disclosure along with the description of the invention below. The present disclosure shall not be construed as limited to the matters stated in the drawings.
FIG. 1 is a schematic diagram of an electrode material heat treatment apparatus.
FIG. 2 is a schematic diagram of a top view of a transfer apparatus.
FIG. 3 is a schematic diagram of a side view of a transfer apparatus.
FIG. 4 is a diagram of second rollers.
FIGS. 5 and 6 are diagrams of a second transfer unit.
FIGS. 7 to 19 show operations of a transfer apparatus.

### Best Mode

A transfer apparatus includes a first transfer unit including a plurality of first rollers and a first driving apparatus configured to drive the plurality of first rollers and into which a plurality of objects are introduced, a second transfer unit including a plurality of second rollers, a plurality of alignment areas formed on the plurality of second rollers in the same number as the plurality of objects, and a plurality of second driving apparatuses configured to drive the plurality of second rollers, and a third transfer unit including a plurality of third rollers and a third driving apparatus configured to drive the plurality of third rollers and discharging the plurality of objects, wherein the second transfer unit may individually control rotational speeds of the plurality of second rollers by using the plurality of second driving apparatuses, thereby individually controlling the transfer speeds of the plurality of objects transferred in the plurality of alignment areas.

### Mode for Invention

Embodiments of the present disclosure may be understood with reference to the description and drawings. The described embodiments may have various modifications and may be implemented in various forms. Thus, the embodiments are not limited to embodiments described herein. Additionally, some or all of the features of various embodiments of the present disclosure may be combined with each other. Each embodiment may be implemented independently or in relation to each other. The described embodiments are provided as examples to ensure that the present disclosure is thorough and complete and are intended to completely convey the spirit of the present disclosure to those skilled in the art. The present disclosure is subject to all modifications, equivalents, and alternatives within the spirit and technical scope of the present disclosure. Accordingly, processes, elements, and techniques that are not necessary for those skilled in the art for a complete understanding of the embodiments of the present disclosure may not be described.

Unless otherwise noted throughout the accompanying drawings and description, the same reference signs, letters, or combinations thereof may indicate the same components so that overlapping descriptions are omitted. Additionally, to clearly explain the present disclosure, parts unrelated to the description are omitted.

The relative sizes of elements, layers, and areas in the drawings may be exaggerated for clarity. The use of hatching and/or shading in the accompanying drawings may generally clarify boundaries between adjacent elements. Accordingly, the presence or absence of hatching or shading does not indicate a preferred form or requirement for particular materials, material properties, dimensions, proportions, commonality between figure elements, and/or any other characteristics, properties, and attributes of the element unless specified.

Various embodiments are described herein with reference to cross-sectional examples that schematically illustrate embodiments and/or intermediate structures. Therefore, the appearance of the drawings may vary, e.g., as a result of manufacturing techniques and/or tolerances. In addition, the specific structural or functional description disclosed herein is merely an example to explain embodiments according to the concept of the present disclosure. Therefore, the embodiments disclosed herein shall not be construed as being limited to the shape of the illustrated area and may include, for example, variations in shape due to manufacturing.

The areas shown in the drawings are schematic in nature and their shapes are not intended to be limiting or illustrative of the actual shape of device areas. Additionally, as recognized by those skilled in the art, the described embodiments may be modified in various ways without departing from the spirit or scope of the present disclosure.

Numerous specific details are set forth herein to provide a thorough understanding of various embodiments. However, the various embodiments may be implemented with one or more details or without any detail thereof. In other instances, well-known structures and devices are shown in block diagram form to avoid unnecessarily obscuring the various embodiments.

For ease of explanation herein, spatially relative terms, such as "below", "above", "bottom", "top", and the like may be used to describe the relationship of one element or feature to another as illustrated in the drawings. The spatially relative terms are intended to include various orientations of a device in use or operation, in addition to directions shown in the drawings. For example, if the device in the drawings is turned over, some elements or features described as "below" or "bottom" may be directed "above" the other elements or features. Accordingly, as illustrative terms, "below" and "bottom" may include both up and down directions. The device may be oriented in another direction (e.g., rotated 90 degrees, etc.) and the spatially relative descriptions used herein may be interpreted accordingly. Similarly, when a first part is described as being located "above" a second part, this may mean that the first part is located on the upper side or lower side of the second part.

Additionally, the expression "viewed from the top" may refer to a case where an object is viewed from above and the expression "in a schematic cross-sectional view" may refer to a case where a schematic cross-section is taken by vertically cutting the object. The expression "viewed from the side" may refer to a case where a first object can be located above, below, or to the side of a second object and vice versa. In addition, the term "overlapping" or "stacking" may include layering, lamination, plane, extension, covering, or partially covering, or any other suitable terms that would be understood by those skilled in the art. The expression "not overlap" may include meanings, such as "apart from" or "separated from", and any other suitable equivalents recognized and understood by those skilled in the art. The terms "plane" and "surface" may mean that the first object may be directly or indirectly opposite to the second object. When there is a third object between the first object and the second object, it may be understood that the first object and the second object face each other but are indirectly opposite to each other.

When an element, layer, area or component is referred to as being "formed", "connected" or "coupled" to another element, layer, area or component, the element, layer, area or component may be directly or indirectly formed, connected, or coupled to another element, layer, area or component. In addition, the terms "formed", "connected", or "coupled" may collectively refer to direct or indirect coupling or connection of elements, layers, areas, or components and integral or non-integral coupling or connection thereof so that one or more elements, layers, areas or components can exist. For example, when an element, layer, area or component is referred to as being "electrically connected" or "electrically coupled" to another element, layer, area or component, the element, layer, area or component may be electrically connected or coupled directly to another element, layer, region or component, or the other element, layer, area or component may be present. However, "direct connection" or "direct coupling" may mean that one component is directly connected or coupled to or on another component without intermediate components. Additionally, when a layer, film, area, or guide plate is formed on another layer, film, area, or guide plate, the formation direction is not limited to the upper direction. The layer, film, area, or guide plate may be formed on the side or bottom of another layer, film, area, or guide plate. Conversely, when a layer, film, area, or guide plate is formed "below" another layer, film, area, or guide plate, this may include a case where a layer, film, area, or guide plate is "directly below" another layer, film, area, or guide plate, as well as a case where there is the other layer, film, area, or guide plate between the two. Other expressions that describe relationships between elements, such as "between", "immediately between", or "adjacent to", and "immediately adjacent to", may be interpreted similarly. Additionally, when an element or a layer is referred to as being "between" two elements or layers, it may mean that the element may be the only element between the two elements or layers or there may be other elements in between.

For the purposes of this specification, expressions, such as "at least one or more" or "any one", do not limit the order of individual elements. For example, "at least one of X, Y and Z", "at least one of X, Y or Z", "at least one selected from the group consisting of X, Y and Z" may include X alone, Y alone, Z alone, or any combination of two or more of X, Y and Z. Similarly, expressions, such as "at least one of A and B" and "at least one of A or B", may include "A, B" or "A and B". As used herein, the term "and/or" may generally include any combination of one or more related list items. For example, the expression, such as "A and/or B", may include "A, B", or "A and B".

Although the terms, such as "first", "second", "third", and the like can be used herein to describe various elements, components, areas, layers and/or cross-sections, such elements, components, areas, layers and/or cross-sections are not limited by these terms. These terms are used to distinguish one element, component, area, layer or cross-section from another element, component, area, layer or cross-section. Accordingly, a first element, a first component, a first area, a first layer, or a first cross-section described below may be referred to as a second element, a second component, a second area, a second layer, or a second cross-section without departing from the spirit and scope of the present disclosure. Describing an element as a "first" element may not require or imply the presence of a second or other element. Terms, such as "first" and "second", may be used herein to distinguish different categories or different sets of elements. For clarity, terms, such as "first" and "second", may represent "first category (or first set)" and "second category (or second set)", respectively.

The terms used in this application are merely used to describe specific embodiments and are not intended to limit the present disclosure. As used herein, singular terms are intended to include plural terms and plural terms are also intended to include the singular, unless the context clearly dictates otherwise. The terms "comprise", "include", and "have" when used herein may designate the presence of a specified feature, integer, or step. These expressions do not exclude the presence or addition of one or more other functions, steps, operations, components and/or groups thereof.

If one or more embodiments are implemented differently, a certain process sequence may be performed differently than the described sequence. For example, two processes described in succession may be performed substantially simultaneously or may be performed in an order opposite to the described sequence.

The terms "substantially", "about", "approximately", and other similar terms may be used as terms of approximation rather than terms of degree and may mean that the range of inherent deviations (e.g., range of deviations due to limitations of the measurement system) of the measured or calculated value is satisfied. For example, "about" may mean within one or more standard deviations or within ±30%, 20%, 10%, or 5% of a specified value.

Unless otherwise defined, all terms used herein, including technical or scientific terms, have the same meaning as commonly understood by those skilled in the art to which the present disclosure pertains. Terms, such as those defined in commonly used dictionaries, shall be construed as having a meaning consistent with their meaning in the context of the relevant technology and/or this specification and shall not be interpreted in an idealized or overly formal sense unless explicitly defined herein.

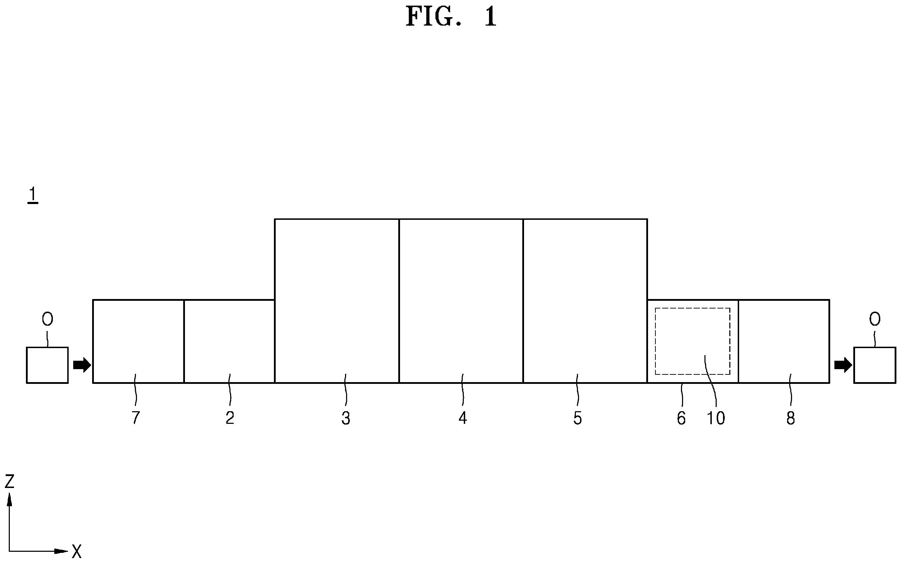

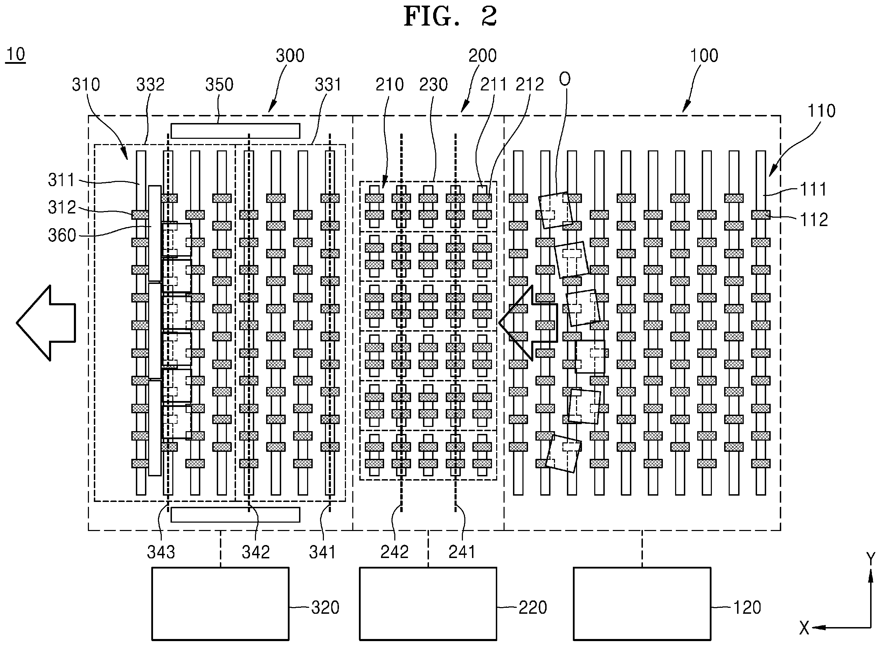

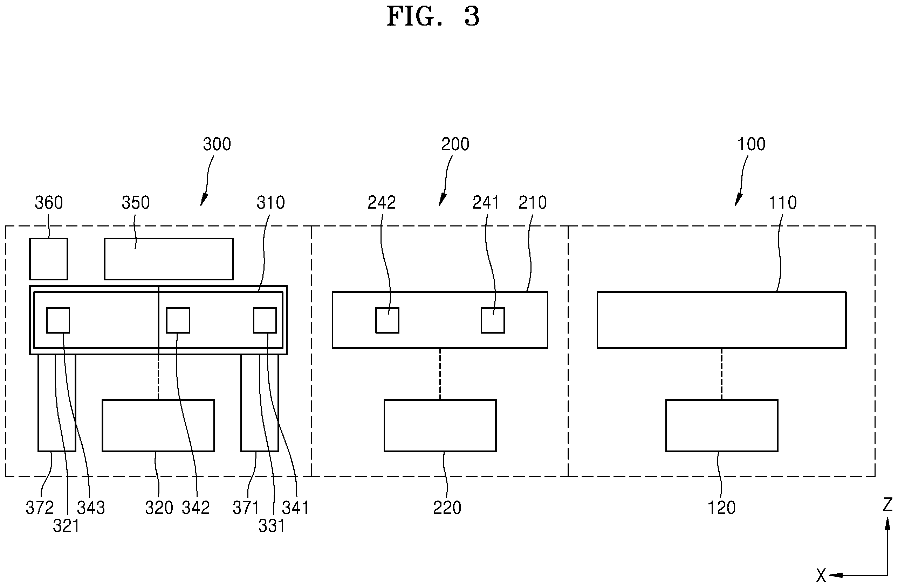

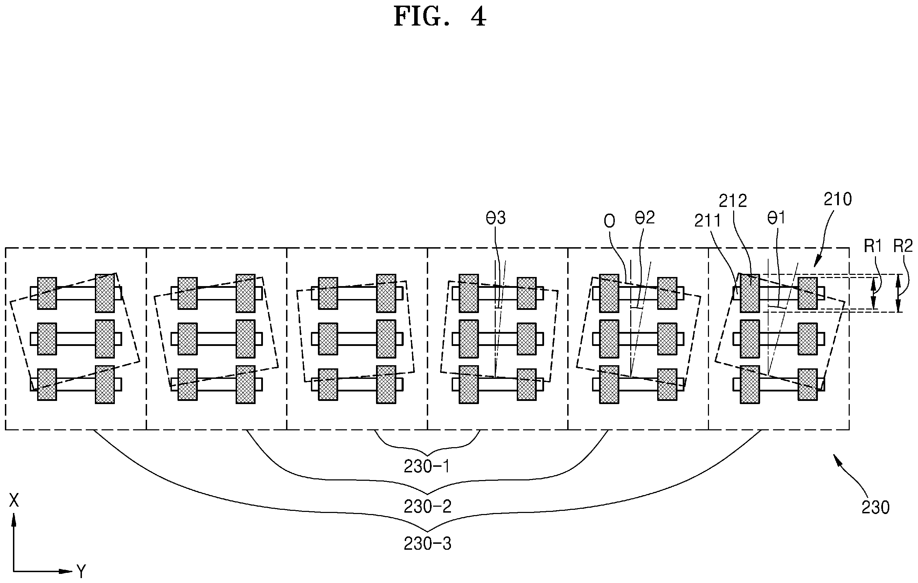

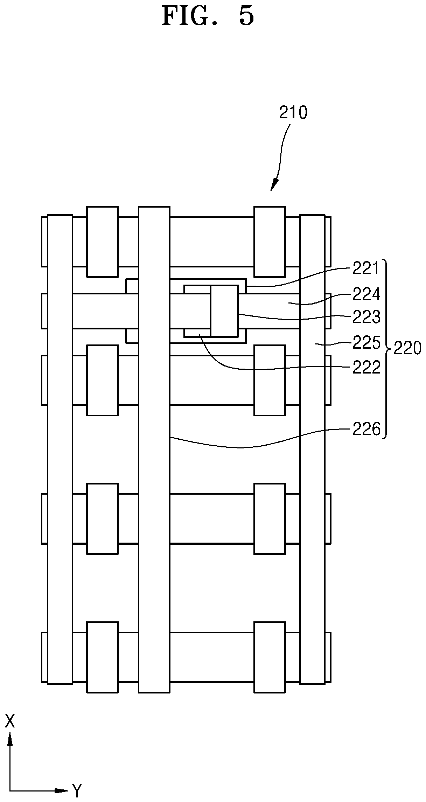

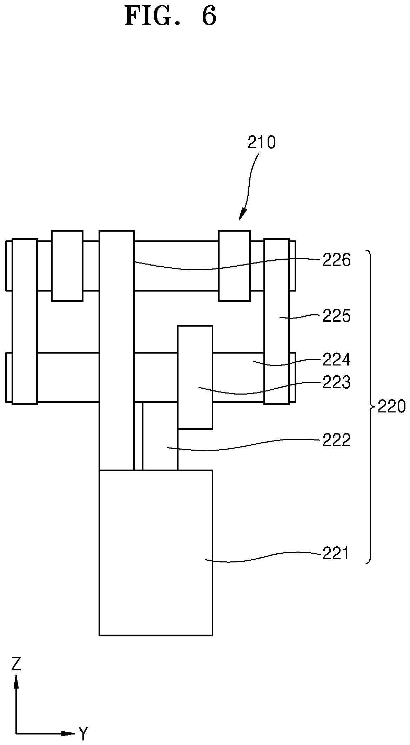

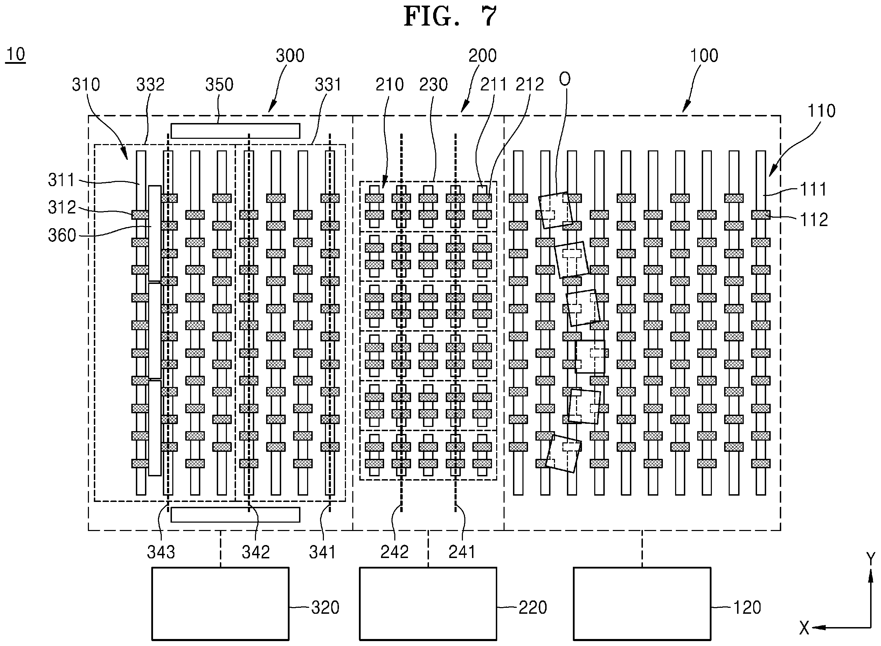

FIG. 1 is a schematic diagram of an electrode material heat treatment apparatus 1, FIG. 2 is a schematic diagram of a top view of a transfer apparatus 10, FIG. 3 is a schematic diagram of a side view of a transfer apparatus 10, FIG. 4 is a diagram of second rollers 210, FIGS. 5 and 6 are diagrams of a second transfer unit 200, and FIGS. 7 to 19 show operations of a transfer apparatus 10.

According to an embodiment, the electrode material heat treatment apparatus 1, which is a device that changes physical properties of an object O by heat-treating the same, may be used to process metals, alloys, and other materials. For example, the electrode material heat treatment apparatus 1 may be used to bake the object O, which is negative electrode active material and/or positive electrode active material for secondary batteries. For example, the object O may include raw material for positive electrode active material of lithium-ion batteries, such as LC0(LiCoO2), NCM (Li(Ni, Co, Mn)O2), NCA(Li(Ni, Co, AI)O2), LMO(LiMn2O4), LFO(LiFePO4). The object O accommodated in a case, such as a sagger, may be transferred by rollers within the electrode material heat treatment apparatus 1.

For example, the electrode material heat treatment apparatus 1 may include a plurality of areas through which objects O sequentially pass. The plurality of areas may include a preheating area 2 to preheat the objects O, a heating area 3 located behind the preheating area 2 and heating the objects O to a set temperature, a maintaining area 4 located behind the heating area 3 and maintaining the temperature corresponding to the heating area 3, a cooling area 5 located behind the maintaining area 4 and cooling the objects O, and an alignment area 6 located behind the cooling area 5 and aligning the objects O, wherein the alignment area 6 may include the transfer apparatus 10 to be described below.

For example, the electrode material heat treatment apparatus 1, which is a roller hearth-type electrode material heat treatment apparatus, may include a plurality of areas through which the objects O sequentially pass. For example, the electrode material heat treatment apparatus 1 may include the preheating area 2, the heating area 3, the maintaining area 4, the cooling area 5, and the alignment area 6. In addition, the electrode material heat treatment apparatus 1 may further include an entry area 7 and an exit area 8 located at the front and rear ends of the electrode material heat treatment apparatus 1, respectively.

As shown in FIG. 1, the entry area 7 may be located at the very front of the electrode material heat treatment apparatus 1. The entry area 7 may include a door (not shown) for entry of the objects O, wherein the objects O may enter the electrode material heat treatment apparatus 1 through the entry area 7. The entry area 7 may function as a buffer or curtain to prevent disturbance due to external air when the objects O enter the electrode material heat treatment apparatus 1.

The preheating area 2 located between the entry area 7 and the heating area 3 may preheat and transfer the objects O to the heating area 3. The preheating area 2 may preheat the objects O to prevent excessive load from being applied to the heating area 3. When the object O is a lithium transition metal compound, moisture may be generated from the object O during the heat treatment process because the object O contains a large amount of oxygen. The preheating area 2 may further include a moisture discharge hood (not shown) to smoothly remove and discharge moisture. The preheating area 2 may preheat the objects O to 50°C to 200°C, or 70°C to 150°C, or 90°C to 120°C. The preheating area 2 may preheat the objects O by receiving high temperature gas from a supply pipe. Alternatively, the preheating area 2 may preheat the objects O by using a separate heater.

The heating area 3 located behind the preheating area 2 may heat the objects O to a certain temperature. The heating area 3 may heat the objects O by using a high temperature gas or using a heater. The heater included in the heating area 3 may heat the objects O. The heating temperature of the heater may vary depending on the type of objects O. The heater may heat the objects O to 500°C to 1500°C, or 700°C to 1400°C, or 800°C to 1300°C, or 950°C to 1250°C, or 700°C to 900°C, or 300°C to 400°C.

The maintaining area 4 located behind the heating area 3 may perform heat treatment by maintaining the heated objects O at a temperature similar to that of the heating area 3. In other words, the objects O may be preheated in the preheating area 2, then heated to the temperature for heat treatment in the heating area 3, and then heat-treated while maintained at the heat treatment temperature in the maintaining area 4.

The cooling area 5 located behind the maintaining area 4 may cool the objects O that have been heat-treated in the maintaining area 4. The cooling area 5 may cool the objects O by using low-temperature gas. The objects O that have passed through the cooling area 5 may be discharged to the outside of the electrode material heat treatment apparatus 1.

For example, one or more of the preheating area 2, the heating area 3, the maintaining area 4, and the cooling area 5 may include a supply pipe that supplies gas internally and an exhaust pipe that discharges gas generated during the heat treatment process to the outside.

The alignment area 6 located behind the cooling area 5 may align the objects O. While the plurality of objects O pass through the heating area 3, the maintaining area 4, and the cooling area 5, the plurality of objects O may be misaligned and meander. For example, each of the plurality of areas may include rollers for transferring the objects O. These rollers may change to a shape in which center areas of the rollers sag, e.g., concave downward, due to a high temperature environment and/or a weight of the objects O. As a result, a contact state between rollers and the objects O may vary for each area, e.g., central areas and edge areas of the rollers, and a drive transmission power of the rollers may vary depending on the locations of the objects O and the objects O may meander. To this end, the alignment area 6 may include the transfer apparatus 10 for transferring and aligning the plurality of objects O.

For example, the alignment area 6 may further include the supply pipe that supplies gas to the inside and the exhaust pipe that discharges gas to the outside. The supply pipe in the alignment area 6 may provide atmospheric gas corresponding to the inside of the electrode material heat treatment apparatus 1. The plurality of objects O may be cooled by the atmospheric gas and the exhaust pipe of the alignment area 6 may exhaust the atmospheric gas supplied through the supply pipe. In this case, the objects O may be cooled gradually while passing through the cooling area 5 and the alignment area 6, thereby preventing quality deterioration that may occur during the cooling process.

The exit area 8 may be located behind the alignment area 6. The exit area 8 may include a door (not shown) for discharging the objects O, wherein the objects O may be discharged to the outside of the electrode material heat treatment apparatus 1 through the exit area 8. The exit area 8 may function as a buffer or curtain to prevent disturbance with external air when discharging the objects O to the outside of the electrode material heat treatment apparatus 1.

With respect to the transfer apparatus 10 of the alignment area 6 again, the transfer apparatus 10 located behind the cooling area 5 may transfer and align the plurality of heat-objects O. The transfer apparatus 10 may align the plurality of objects O loaded in sagger and sequentially transfer the same to the outside of the electrode material heat treatment apparatus 1.

For example, the transfer apparatus 10 may include a first transfer unit 100, a second transfer unit 200, and a third transfer unit 300.

For example, the transfer apparatus 10 may include the first transfer unit 100 including a plurality of first rollers 110 and a first driving apparatus 120 that drives the plurality of first rollers 110 and into which the plurality of objects O are introduced, a second transfer unit 200 including a plurality of second rollers 210, a plurality of alignment areas 230 formed on the plurality of second rollers 210 in the same number as the plurality of objects O, and a plurality of second driving apparatuses 220 that drive the plurality of second rollers 210, and the third transfer unit 300 including a plurality of third rollers 310 and a third driving apparatus 320 that drives the plurality of third rollers 310 and from which the plurality of objects O are discharged, wherein the second transfer unit 200 may individually control the rotational speed of the plurality of second rollers 210 by using the plurality of second driving apparatuses 220, thereby individually controlling the transfer speed of the plurality of objects O transferred in the plurality of alignment areas 230.

The first transfer unit 100 located at the entry side where a plurality of objects O for which the heat treatment process is completed are introduced may transfer the plurality of objects O to the second transfer unit 200. In the drawings, the number of objects O introduced into the first transfer unit 100 is shown as six, but the number of objects O may vary depending on the size and specifications of the electrode material heat treatment apparatus 1, e.g., five or more or seven or less.

For example, the first transfer unit 100 may include the first rollers 110 and the first driving apparatus 120.

The plurality of first rollers 110 may be aligned in a second direction (e.g., Y-axis direction of FIG. 2) that crosses a first direction, which is a transfer direction (e.g., X-axis direction of FIGS. 1 and 2) of the objects O. The first roller 110 may include a rotation shaft 111 and a plurality of rotation members 112 provided on the rotation shaft 111. As the rotating members 112 of each first roller 110 and the rotating members 112 of adjacent first rollers 110 are arranged in a staggered manner, edges of the objects O may be prevented from falling into the space between the rotating members 112 while the objects O are transferred. Although the drawings show ten first rollers 110, the number of first rollers 110 may vary depending on the number and size of the transferred objects O, e.g., nine or less or eleven or more. In the drawings, ten rotating members 112 are shown in one first roller 110, but the number of rotating members 112 may vary depending on the number and size of the transferred objects O, e.g., nine or less or eleven or more.

The first driving apparatus 120 may control the rotational speed of the plurality of first rollers 110 to adjust the transfer speed of the objects O. The first driving apparatus 120 may be a hydraulic or electric motor or cylinder. The first driving apparatus 120 may rotate the plurality of first rollers 110 at a certain speed to transfer the plurality of objects O to the second transfer unit 200. For example, the first driving apparatus 120 may control the speed at which the objects O are transferred to the second transfer unit 200 by adjusting the rotational speed of the plurality of first rollers 110, considering the location and state of the objects O to be transferred to the second transfer unit 200 and the third transfer unit 300. For example, the first driving apparatus 120 may constantly control or increase the rotational speed of the plurality of first rollers 110. However, embodiments are not limited to thereto. The first driving apparatus 120 may individually control or equally control the rotational speed of the plurality of first rollers 110.

The second transfer unit 200 may receive the plurality of objects O from the first transfer unit 100 and transfer the same to the third transfer unit 300. The second transfer unit 200 may be located between the first transfer unit 100 and the third transfer unit 300.

For example, the second transfer unit 200 may align the plurality of objects O that meander in the process of being transferred from the first transfer unit 100 and may transfer the same to the third transfer unit 300. The second transfer unit 200 may adjust the transfer speed of each of the plurality of objects O so that the plurality of objects O are transferred in a row.

For example, the second transfer unit 200 may include the plurality of second rollers 210 and the plurality of second driving apparatuses 220.

The plurality of second rollers 210 are aligned in a direction (e.g., Y-axis direction in FIG. 2) that crosses the transfer direction (e.g., X-axis direction in FIGS. 1 and 2) of the objects O. The second roller 210 may include a rotation shaft 211 and a plurality of rotation members 212 provided on the rotation shaft 211.

For example, the plurality of second rollers 210 may be spaced apart in the first and second directions. For example, as shown in FIG. 2, the plurality of second rollers 210 may be spaced apart from each other in the first direction (e.g., X-axis direction in FIG. 2), which is the transfer direction of the objects O. Additionally, the plurality of second rollers 210 may be spaced apart from each other in the second direction (e.g., the Y-axis direction in FIG. 2) that crosses the first direction. The rotational speed of the plurality of second rollers 210 may be individually controlled by the second driving apparatuses 220.

For example, the plurality of second rollers 210 may form the same number of rows as the plurality of objects O. As shown in FIG. 2, six objects O may each enter the second rollers 210 forming six rows in the first direction.

In the drawings, each row of second rollers 210 is shown to include five second rollers 210 but the number of second rollers 210 may vary depending on the number and size of the objects O e.g., four or less or six or more. In the drawings, two rotating members 212 are shown on one second roller 210 but the number of rotating members 212 may vary depending on the number and size of the transferred objects O, e.g., at least two.

For example, the plurality of second rollers 210 may be operated by the second transfer unit 200 and may operate independently from the first transfer unit 100. The plurality of second rollers 210 may be rotated or the rotational speed thereof may be adjusted by the second driving apparatuses 220 of the second transfer unit 200. The plurality of second rollers 210 may not be connected to the first driving apparatus 120. The change in rotational speed of the plurality of second rollers 210 may be controlled only by the second driving apparatuses 220 and the low-speed or high-speed rotation of the plurality of second rollers 210 may not be related to the first driving apparatus 120. In other words, the operation of the plurality of second rollers 210 may not be related to the first driving apparatus 120 and the plurality of second rollers 210 may not include any connection members with the first driving apparatus 120, thereby simplifying the configuration of the transfer apparatus 10.

For example, the plurality of second rollers 210 may partition the plurality of alignment areas 230.

The plurality of alignment areas 230 may refer to areas where the plurality of second rollers 210 support the plurality of objects O. For example, the plurality of alignment areas 230 may be partitioned by the plurality of second rollers 210 included in one row. As shown in FIG. 2, when the plurality of second rollers 210 form six rows, the plurality of alignment areas 230 may also be partitioned into six areas. Additionally, the number of alignment areas 230 may be equal to the number of transferred objects O. Therefore, as shown in FIG. 2, when six objects O enter the second transfer unit 200, the objects O may enter the six alignment areas 230, respectively. By controlling the rotational speed of the plurality of second rollers 210 included in each alignment area 230 using the second driving apparatus 220, the transfer speed of each object O may be adjusted.

The plurality of second rollers 210 included in the plurality of alignment areas 230 may have different sizes. For example, as shown in FIG. 2, one alignment area 230 may include one second roller 210 and a pair of rotation members 212 located thereon in the second direction. In addition, as shown in FIG. 4, a diameter R2 of an outer rotating member 212 may be less than a diameter R1 of an inner rotating member 212 in the second direction (e.g., the Y-axis direction in FIG. 4) among the pair of rotating members 212. Therefore, the object O transferred in the alignment area 230 may rotate outward by a degree of θ in the second direction for transfer in the second transfer unit 200 and may not interfere with the adjacent object O.

For example, the plurality of objects O entering the first transfer unit 100 may collide with each other while traveling on the plurality of first rollers 110 or may be misaligned due to a slight speed difference between the plurality of first rollers 110. As shown in FIG. 2, the plurality of objects O may rotate inward and meander. To align the meandering objects O, the diameter of the outer rotation member 212 of the plurality of second rollers 210 may be less than the diameter of the inner rotation member 212 thereof. Therefore, as shown in FIG. 4, the object O transferred in each alignment area 230 rotates outward by a degree of θ in the second direction, thereby eliminating the meandering.

For example, R2 may be 1.05 to 1.2 times R1. When R2 is less than 1.05 times R1, the objects O may not rotate sufficiently, thereby causing interference between the objects O. When R2 is more than 1.2 times R1, the objects O may rotate excessively so that the vertex of the object O contacts the adjacent object O and the objects O may be tilted excessively in the height direction (e.g., Z-axis direction in FIG. 3). For example, R2 may be 1.1 to 1.15 times R1. For example, the difference between R2 and R1 may be set such that the rotation angle θ of the object O meets the ranges of 5 to 20 degrees. For example, the difference between R2 and R1 may be set such that the rotation angle θ of the object O meets the ranges of 10 to 15 degrees.

For example, diameter differences between the plurality of rotation members 212 included in the plurality of alignment areas 230 may vary. For example, the diameter difference between the plurality of outer rotating members 212 in the second direction may be greater than the diameter difference between the plurality of inner rotating members 212 in the second direction. As shown in FIG. 4, the plurality of alignment areas 230 may include a pair of first alignment areas 230-1 located at the center of the plurality of alignment areas 230 in the second direction, a pair of second alignment areas 230-2 adjacent to the pair of first alignment areas 230-1 and located on the outer side thereof in the second direction, and a pair of third alignment areas 230-3 adjacent to the pair of second alignment areas 230-2 and located on the outermost side thereof in the second direction. The diameter difference between the pair of rotation members 212 included in the pair of first alignment areas 230-1 may be less than the diameter difference between the pair of rotation members 212 included in the pair of second alignment areas 230-2. In addition, the diameter difference between the pair of rotation members 212 included in the pair of second alignment areas 230-2 may be less than the diameter difference between the pair of rotation members 212 included in the pair of third alignment areas 230-3. Accordingly, as shown in FIG. 4, the objects O in the pair of third alignment areas 230-3 may rotate outward by the largest angle θ1, the objects O in the pair of second alignment areas 230-2 may rotate outward by an angle θ2 less than θ1, and the objects O in the pair of third alignment areas 230-3 may rotate outward by an angle θ3 less than θ2. As shown in FIG. 2, depending on the operating conditions of the transfer apparatus 10, the outer object O among the plurality of objects O may rotate more inward while passing through the first transfer unit 100. The transfer apparatus 10 may further rotate the outer object O through the configuration regarding the diameter difference of the rotating members 212, thereby eliminating the meandering of the plurality of objects O.

The second driving apparatuses 220 may control the rotational speed of the plurality of second rollers 210 to adjust the transfer speed of the objects O. The second driving apparatuses 220 may be hydraulic or electric motors or cylinders. The second driving apparatuses 220 may individually control the rotational speed of the plurality of second rollers 210. For example, the second driving apparatuses 220 may correspond to the plurality of alignment areas 230, respectively, partitioned by the plurality of second rollers 210. In addition, the second driving apparatuses 220 may adjust the rotational speed of the plurality of second rollers 210 that partition the alignment areas 230 so that the plurality of objects O are transferred in line without meandering. For example, the second driving apparatuses 220 allow the second rollers 210 to rotate at the same rotational speed as the first rollers 110 or to rotate at a faster or slower rotational speed than the rotational speed of the first rollers 110.

For example, the second driving apparatuses 220 may be provided in the same number as the plurality of alignment areas 230 and may be located below the plurality of alignment areas 230, respectively. In other words, the plurality of second driving apparatuses 220 may not be separated from the plurality of second rollers 210 and may be below the plurality of second rollers 210 when viewed from the top. Therefore, not only can the overall size of the transfer apparatus 10 be reduced in the width direction (e.g., the Y-axis direction in FIG. 2), but also can the plurality of second driving apparatuses 220 be simply connected to the plurality of second rollers 210. For example, unlike a conventional transfer apparatus in which multiple rotating axes connecting driving apparatuses to rollers pass through other rollers, the plurality of second driving apparatuses 220 may be directly connected to the plurality of second rollers 210 immediately below, thereby simplifying the connection mechanism between the second driving apparatuses 220 and the second rollers 210 and facilitating maintenance and repair.

For example, the second driving apparatuses 220 may include an actuator 221, an input gear 222, a transmission gear 223, a connecting shaft 224, a connecting belt 225, and a gear box 226.

The actuator 221 which is a member for driving the second driving apparatuses 220 may include a hydraulic or electric motor or cylinder. Hereinafter, for convenience of explanation, the description may focus on the case where the actuator 221 is an electric motor. The actuator 221 may have the input gear 222 on one side. When the actuator 221 operates, the input gear 222 may rotate and the transmission gear 223 mounted on the connecting shaft 224 may also rotate. The connecting shaft 224 may be located below the plurality of second rollers 210 and may be connected to the plurality of second rollers 210 through the connecting belt 225 and the gear box 226. Therefore, when the actuator 221 operates, the input gear 222 may rotate and the transmission gear 223 may rotate, thereby causing the connection shaft 224 to rotate. The second rollers 210, which are connected to the connecting shaft 224 through the connecting belt 225 and the gear box 226 mounted on the connecting shaft 224, may also rotate and the rotational speed of the second rollers 210 may be adjusted.

For example, the second transfer unit 200 may include a first sensor 241 and a second sensor 242.

The first sensor 241 adjacent to the entry side of the second transfer unit 200 may detect whether the objects O enter the second transfer unit 200. Additionally, the first sensor 241 may detect the location of at least one object O that has entered the second transfer unit 200.

One or more first sensors 241 may be provided and may be located on at least one of an inner upper surface and an inner lower surface of the second transfer unit 200, which faces an upper surface or a lower surface of the object O. For example, the first sensor 241 may be located on the top or the bottom of the second roller 210. The first sensors 241 included in the plurality of alignment areas 230, respectively, may detect the location of the objects O on the plurality of alignment areas 230. The number of first sensors 241 may be equal to the number of alignment areas 230. That is, the first sensors 241 may be located in areas corresponding to the plurality of alignment areas 230 in the vertical direction (e.g., Z-axis direction perpendicular to X-axis direction and Y-axis direction) on a virtual dashed line extending in the second direction (e.g., Y-axis direction in FIG. 2).

The first sensors 241 may detect the entry and location of the plurality of objects O and transmit the same to the second transfer unit 200 and the second transfer unit 200 may control the second driving apparatuses 220 based on the location of the plurality of objects O detected by the first sensors 241 to adjust the rotational speed of the plurality of second rollers 210.

The second sensor 242 spaced apart from the first sensor 241 and adjacent to the exit side of the second transfer unit 200 may detect the entry of the objects O at this location. Additionally, the second sensor 242 may detect the location of at least one object O at the exit side of the second transfer unit 200.

A plurality of second sensors 242 may be provided and may be located on the inner upper or lower inner surface of the second transfer unit 200 facing the upper or lower surface of the object O. For example, the second sensors 242 may be located on the top or the bottom of the second rollers 210. The second sensors 242 located in the plurality of alignment areas 230, respectively, may detect the location of the objects O on the plurality of alignment areas 230. The second sensors 242 may be provided in the same number as the number of alignment areas. That is, the second sensors 242 may be located in areas corresponding to the plurality of alignment areas 230 in the vertical direction (e.g., Z-axis direction perpendicular to X-axis direction and Y-axis direction) on a virtual dashed line extending in the second direction (e.g., Y-axis direction in FIG. 2).

The second sensors 242 may detect the entry and location of the plurality of objects O and transmit the same to the second transfer unit 200 and the second transfer unit 200 may control the second driving apparatuses 220 based on the location of the plurality of objects O detected by the second sensors 242 to adjust the rotational speed of the plurality of second rollers 210.

While being transferred from the first transfer unit 100, the plurality of objects O may not enter the second transfer unit 200 in an aligned state due to collision or interference between the objects O, thereby causing the positional difference between the objects O in the transport direction as shown in FIG. 2. To correct the positional difference between the plurality of objects O, the location of other objects O may be corrected based on the location of the uppermost object O. For example, the second transfer unit 200 may control the rotational speed of the plurality of second rollers 210 of the alignment area 230 corresponding to the second sensor 242 that first detected the object O among the plurality of second sensors 242 in the plurality of alignment areas 230. To transfer the uppermost object O and other objects O in an aligned state, the second driving apparatuses 220 may increase the rotational speed of the plurality of second rollers 210 included in the plurality of alignment areas 230 supporting the other objects O than the uppermost object O.

For example, when any one of the plurality of second sensors 242 detects the object O first, the second transfer unit 200 may increase the rotational speed of the second rollers 210 in alignment areas 230 where the first sensors 241 detect the objects O among the other alignment areas 230 than the alignment area 230 where the second sensor 242 is located. In other words, the second transfer unit 200 may increase the rotational speed of the second rollers 210 with respect to the alignment areas 230 where the objects O have passed the first sensors 241. Thus, although the objects O do not reach the point where the first sensors 241 are located, the rotational speed of the second rollers 210 may be increased to prevent rattling in the process of transferring the objects O from the first transfer unit 100 to the second transfer unit 200. On the other hand, in the other alignment areas 230, the rotational speed of the second rollers 210 may be maintained without increasing the rotational speed of the second rollers 210 in the alignment areas 230 where the first sensors 241 do not detect the objects O. In this case, among the objects O included in one group, the late objects O entering the above area may be managed separately,

For example, when the second sensors 242 in the alignment areas 230 corresponding to the plurality of second rollers 210 with the increased rotational speed detect the objects O, the second transfer unit 200 may lower the rotational speed of the plurality of second rollers 210 in the corresponding alignment areas 230. Specifically, when the second sensors 242 in the alignment areas 230 corresponding to the plurality of second rollers 210 with the increased rotational speed detect the objects O, the first sensors 241 corresponding to the alignment areas 230 may not detect the objects O as the objects O have passed and the second transfer unit 200 may lower the rotational speed of the plurality of second rollers 210 in the corresponding alignment areas 230.

The first sensor 241 and the second sensor 242 may include any sensor that detects a plurality of objects O and include one of various types of sensors, such as a plurality of optical sensors, ultrasonic sensors, laser sensors, vision cameras, and electromagnetic sensors. For example, the first sensor 241 and the second sensor 242 may include laser sensors that irradiate the plurality of objects O and receive the reflected light to determine the location of the plurality of objects O.

For example, the first sensor 241 and the second sensor 242 may be located on one side of the second transfer unit 200 facing the side surface of the object O. In this case, one or more first sensors 241 and one or more second sensors 242 may be provided. When the first sensor 241 and the second sensor 242 are provided in plural numbers, each sensor may be provided in fewer or equal numbers than the plurality of alignment areas 230.

For example, the second transfer unit 200 may include a plurality of first sensors 241 and a plurality of second sensors 242, located in the plurality of alignment areas 230, respectively, in the first direction. When the second sensor 242 in any one alignment area 230 detects the object O, the second transfer unit 200 may increase the rotational speed of the plurality of second rollers 210 in alignment areas 230 where the first sensors 241 detect the object O and the second sensors 242 do not detect the object O among the other alignment areas 230.

For example, when the second sensors 242 in the alignment areas 230 corresponding to the plurality of second rollers 210 with the increased rotational speed detect the objects O, the second transfer unit 200 may lower the rotational speed of the plurality of second rollers 210 in the corresponding alignment areas 230.

The third transfer unit 300 located behind the transfer apparatus 10 may discharge the plurality of objects O transferred from the first transfer unit 100 and the second transfer unit 200 to the outside of the transfer apparatus 10. For example, the third transfer unit 300 may realign and discharge the plurality of objects O that were once aligned in the second transfer unit 200.

For example, the third transfer unit 300 may include a first stage 331 that has some of the plurality of third rollers 310 and can be raised and lowered, a second stage 332 that has the others of the plurality of third rollers 310 and can be raised and lowered, a fourth sensor 342 on the first stage 331 adjacent to the boundary between the first stage 331 and the second stage 332, and a fifth sensor 343 on the second stage 332, wherein the first stage 331 may be located between the second transfer unit 200 and the second stage 332.

For example, the third transfer unit 300 may include the third rollers 310 and the third driving apparatus 320.

The plurality of third rollers 310 may be aligned in the second direction that crosses the first direction, which is the transfer direction of the objects O. The third roller 310 may include a rotation shaft 311 and a plurality of rotation members 312 provided on the rotation shaft 311. As the rotating members 312 of each first roller 310 and the rotating members 312 of adjacent first rollers 310 are arranged in a staggered manner, edges of the objects O may be prevented from falling into the space between the rotating members 312 while they are transferred. Although the drawings show eight third rollers 310, the number of third rollers 310 may vary depending on the number and size of the transferred objects O, e.g., seven or less or eight or more. In the drawings, ten rotating members 312 are shown on one third roller 310, but the number of rotating members 312 may vary depending on the number and size of the transferred objects O, e.g., nine or less or eleven or more.

The third driving apparatus 320 may control the rotational speed of the plurality of third rollers 310 to adjust the transfer speed of the objects O. The third driving apparatus 320 may be a hydraulic or electric motor or cylinder. The third driving apparatus 320 may rotate the plurality of third rollers 310 at a certain speed to discharge the plurality of objects O to the outside of the transfer apparatus 10. For example, the third driving apparatus 320 may control the speed at which the objects O are transferred to the outside by adjusting the rotational speed of the plurality of third rollers 310, considering the location and state of the objects O transferred from the second transfer unit 200.

For example, the third driving apparatus 320 may constantly control or increase the rotational speed of the plurality of third rollers 310. In addition, the third driving apparatus 320 may individually control the rotational speed of the plurality of third rollers 310 included in the first stage 331 and the plurality of third rollers 310 included in the second stage 332, to be described below. For example, the rotational speed of the plurality of third rollers 310 included in the first stage 331 may be maintained the same as the rotational speed of the plurality of third rollers 310 included in the second stage 332 or may be raised or lowered from the rotational speed of the plurality of third rollers 310 included in the second stage 332. However, embodiments are not limited to thereto. The third driving apparatus 320 may individually control or equally control the rotational speed of the plurality of first rollers 310.

For example, the third transfer unit 300 may include first stage 331 and second stage 332.

As shown in FIGS. 2 and 3, the first stage 331 and the second stage 332 include areas where the plurality of third rollers 310 are provided. The first stage 331 and the second stage 332 may be supported by the first lift 371 and the second lift 372, respectively, and may be raised and lowered independently of each other by a first lift 371 and a second lift 372. For example, in the transfer direction of the objects O, some of the plurality of third rollers 310 may be located on the first stage 331 and others thereof may be located on the second stage 332. The first stage 331 and the second stage 332 may be raised and lowered depending on the location of the plurality of objects O.

For example, when the plurality of objects O enter the second stage 332 and move to an area corresponding to a stopper 360, the third transfer unit 300 may raise the second stage 332. For example, when all of the plurality of objects O enter the plurality of third rollers 310 provided on the second stage 332, the second stage 332 may be raised by the second lift 372 to form a level difference from the first stage 331. In this state, centering apparatuses 350 to be described below may enter the second stage 332 to align the plurality of objects O. When the plurality of objects O are aligned, the second stage 332 may be lowered again and the stopper 360 may be lowered on the transfer path to discharge the plurality of objects O from the third transfer unit 300.

For example, the third transfer unit 300 may include a third sensor 341, a fourth sensor 342, and a fifth sensor 343.

The third sensor 341 may be located adjacent to the entry side of the third transfer unit 300. The third sensor 341 may be closer to the second transfer unit 200 than the center of the third transfer unit 300 in the transfer direction of the objects O. The third sensor 341 may be located on the first stage 331. The third sensor 341 may detect whether the objects O enter the third transfer unit 300. Additionally, the third sensor 341 may detect the location of at least one object O at the entry side of the third transfer unit 300.

For example, one or more third sensors 341 may be provided. When one third sensor 341 is provided, the third sensor 341 may be located on one side of the third transfer unit 300 facing the side of the object O. In addition, when a plurality of third sensors 341 are provided, the number of third sensors 341 may be less than or equal to the plurality of alignment areas 230 and the plurality of third sensors 341 may correspond to, e.g., the plurality of alignment areas 230 where the plurality of objects O are located. The third sensor 341 may detect the location of at least one of the plurality of objects O and transmit the same to the third transfer unit 300 and the third transfer unit 300 may control the third driving apparatus 320 based on the location of at least one of the plurality of objects O detected by the third sensor 341 to adjust the rotational speed of the plurality of third rollers 310.

The fourth sensor 342 may be located on one side of the third transfer unit 300, spaced apart from the third sensor 341. The fourth sensor 342 may be spaced apart from the center of the third transfer unit 300 toward the entry side of the third transfer unit 300 in the transfer direction of the objects O. The fourth sensor 342 may be located on the first stage 331. For example, the fourth sensor 342 may be located in an area adjacent to the end of the first stage 331, adjacent to the boundary between the first stage 331 and the second stage 332. The fourth sensor 342 may detect the location of at least one object O.

For example, one or more fourth sensors 342 may be provided. When one fourth sensor 342 is provided, the fourth sensor 342 may be located on one side of the third transfer unit 300 facing the side of the object O. In addition, when a plurality of fourth sensors 342 are provided, the number of fourth sensors 342 may be less than or equal to the plurality of alignment areas 230 and the plurality of fourth sensors 342 may correspond to, e.g., the plurality of alignment areas 230 where the plurality of objects O are located. The fourth sensor 342 may detect the location of at least one of the plurality of objects O and transmit the same to the third transfer unit 300 and the third transfer unit 300 may control the third driving apparatus 320 based on the location of at least one of the plurality of objects O detected by the fourth sensor 342 to adjust the rotational speed of the plurality of third rollers 310 and the location of the first lift 371.

The fifth sensor 343 may be located on one side of the third transfer unit 300, spaced apart from the fourth sensor 342. The fifth sensor 343 may be spaced apart from the center of the third transfer unit 300 toward the exit side of the third transfer unit 300 in the transfer direction of the objects O. The fifth sensor 343 may be located on the second stage 332. For example, the fifth sensor may be closer to an end of the second stage 332 opposite to the other end of the second stage 332 adjacent to the first stage 331 than the other end thereof. The fifth sensor 343 may be located in an area in front of the stopper 360. The fifth sensor 343 may detect the location of at least one object O. The fifth sensor 343 may detect the presence or absence of the object O in the area in front of the stopper 360. The area in front of the stopper 360 including an area located in front of the stopper 360, adjacent to the stopper 360 with respect to the transfer direction may refer to an area where the forward movement of the objects O is restricted by the stopper 360.

For example, one or a plurality of fifth sensors 343 may be provided. When one fifth sensor 343 is provided, the fifth sensor 343 may be located on one side of the third transfer unit 300 facing the side of the object O. In addition, when a plurality of fifth sensors 343 are provided, the number of fifth sensors 343 may be less than or equal to the plurality of alignment areas 230 and the plurality of fifth sensors 342 may correspond to, e.g., the plurality of alignment areas 230 where the plurality of objects O are located. The fifth sensor 343 may detect the location of at least one of the plurality of objects O and transmit the same to the third transfer unit 300 and the third transfer unit 300 may control the third driving apparatus 320 based on the location of at least one of the plurality of objects O detected by the fifth sensor 343 to adjust the rotational speed of the plurality of third rollers 310 and the location of the second lift 372.

For example, the plurality of objects O passed through the second transfer unit 200 and provided to the third transfer unit 300 may move at high speed to areas corresponding to the fifth sensors 343. In detail, a plurality of objects O included in group 1 may be aligned within a set error range in the process of moving from the second transfer unit 200 to the areas corresponding to the second sensors 242 by the plurality of second rollers 210. Thereafter, the objects O in group 1 may be moved at high speed to the third transfer unit 300 by the second rollers 210 of the second transfer unit 200.

Subsequently, the plurality of objects O included in group 1 may be moved at high speed to the area in front of the stopper 360, e.g., an area where forward movement is restricted by the stopper 360, by the third rollers 310 of the third transfer unit 300. The plurality of objects O included in group 1 may not be able to move forward due to the stopper 360 and may be aligned through physical contact with the stopper 360.

For example, as the objects O in group 1 moves to the third transfer unit 300, the objects O may not be detected by the second sensors 242. In this case, the second driving apparatuses 220 of the second transfer unit 200 may adjust the rotational speed of the second rollers 210 back to a low speed. Thereafter, the second transfer unit 200 may be provided with the plurality of objects O in group 2 behind group 1 and the above-described process is repeated.

For example, when the fifth sensors 343 detect the objects O, the third transfer unit 300 may operate the second lift 372 after a certain time to raise the second stage 332. The third transfer unit 300 may operate the second lift 372 to raise the second stage 332 when the fifth sensors 343 detect the objects O and the fourth sensors 342 do not detect the objects O.

For example, when the fifth sensors 343 detect the objects O, the third transfer unit 300 may operate the centering apparatuses 350, which are described below, to align the plurality of objects O. The second stage 332 may be in an elevated state. The stopper 360, which is described below, may be in an elevated state to prevent the objects O from moving forward.

The third sensors 341 to the fifth sensors 343 may include any sensor that can detect a plurality of objects O and may include one of various types of sensors, such as a plurality of optical sensors, ultrasonic sensors, laser sensors, vision cameras, and electromagnetic sensors. For example, the third sensors 341 to the fifth sensors 343 may include laser sensors that irradiate the plurality of objects O and receive the reflected light to determine the location of the plurality of objects O.

For example, when the fifth sensors 343 detect the objects O and the fourth sensors 342 do not detect the objects O, the third transfer unit 300 may raise the second stage 332 after a set time.

For example, when the fourth sensors 342 and the fifth sensors 343 simultaneously detect the objects O, the third transfer unit 300 may raise the first stage 331 and the second stage 332 after a set time.

For example, the third transfer unit 300 may include the centering apparatuses 350.

The centering apparatuses 350 may be located on one side and the other side of the plurality of third rollers 310, respectively, and may align the plurality of objects O while entering the plurality of third rollers 310. For example, as shown in FIG. 2, a pair of centering apparatuses 350 may be located on both sides of the plurality of third rollers 310. The pair of centering apparatuses 350 which are a type of pushers that move forward and backward by a cylinder may align the plurality of objects O mounted on the plurality of third rollers 310 by pressing the same in the second direction that crosses the first direction, which is the transfer direction of the objects O. The centering apparatuses 350 may be located in areas corresponding to the second stage 332. Additionally, the centering apparatuses 350 may be further located in areas corresponding to portions of the first stage 331.

For example, the centering apparatuses 350 may enter the second stage 332 so that the second stage 332 is raised and the plurality of objects O are aligned in the second direction, while the plurality of objects O are stopped by the stopper 360 moving upward on the transfer path.

For example, the third transfer unit 300 may include the stopper 360.

The stopper 360 located behind the third transfer unit 300 may stop and align the plurality of objects O transferred from the third transfer unit 300. For example, the stopper 360 may be located in the second stage 332. In addition, the stopper 360 may be located between a first third roller 310 and a second third roller 310 among the plurality of third rollers 310 included in the second stage 332, with respect to the exit of the third transfer unit 300.

The stopper 360 may be provided to be movable in the vertical direction from the surface of the third rollers 310. For example, the stopper 360 may rise upward from the surface of the third rollers 310 when the objects O are aligned, thereby restricting the movement of the objects O. Accordingly, the plurality of objects O may be stopped and aligned while contacting the stopper 360. In addition, the aforementioned second stage 332 may rise while the plurality of objects O are stopped in contact with the stopper 360 and the pair of centering apparatuses 350 may align the plurality of objects O in the second direction.

For example, the stopper 360 may be in a default mode when the stopper 360 is raised above the plurality of third rollers 310. When the plurality of objects O are aligned in contact with the stopper 360, the stopper 360 may be lowered and then the plurality of objects O may be discharged from the third transfer unit 300. When all of the plurality of objects O are discharged from the third transfer unit 300, the stopper 360 may be raised again.

The third transfer unit 300 may stop the plurality of third rollers 310 included in the second stage 332 or reduce the rotational speed of the plurality of third rollers 310 while the stopper 360 is raised.

The stopper 360 may include a plurality of polymer body parts and a plurality of elastic members connecting the plurality of body parts. The body parts may be made of polymer, such as polyether ether ketone (PEEK), and may be in direct contact with the plurality of objects O. The body parts may be provided and the elastic members, such as a spring, may be provided between the body parts to connect the body parts. The body parts and the elastic members may absorb shock that occurs when contacting the objects O.

Additionally, the stopper 360 may descend downward from the surface of the third rollers 310 after alignment by the centering apparatuses 350. As a result, the stopper 360 may provide a discharge path for the aligned objects O and the plurality of aligned objects O may move to the outside of the third transfer unit 300 after the second stage 332 is lowered. Accordingly, an embodiment may effectively align and transfer the plurality of objects O.

In addition, the second stage 332 rises when the fifth sensors 343 detect the objects O but is not limited thereto. For example, both of the first stage 331 and the second stage 332 may rise.

For example, not only the fifth sensors 343 but also the fourth sensors 342 may detect the objects O. In this case, the third transfer unit 300 may simultaneously raise the first stage 331 and the second stage 332 by operating the first lift 371 and the second lift 372 after a certain time.

When the objects O are detected by the fourth sensors 342 and the fifth sensors 343, this may mean that the alignment of the objects O is abnormal. For example, the above case may mean that at least one object O is located in the boundary area between the first stage 331 and the second stage 332 or at least one object O remains in the first stage 331. In this case, when only the second stage 332 rises, the objects O located in the boundary area between the two stages 331 and 332 may overturn. To prevent this, both stages 331 and 332 may be raised to prevent overturning in the above case.

In addition, when both the first stage 331 and the second stage 332 are raised as described above, alignment may be performed through the centering apparatuses 350. For example, the centering apparatuses 350 may be located in areas corresponding to portions of the second stage 332 and the first stage 331. Accordingly, the centering apparatuses 350 may align the objects O located on the second stage 332 by pressing the same in the second direction. In addition, the centering apparatuses 350 may press and align the objects O located at the boundary between the first stage 331 and the second stage 332 or located on the first stage 331 corresponding to the centering apparatuses 350.

Afterwards, the stopper 360, the first stage 331, and the second stage 332 may descend and the third transfer unit 300 may rotate the third rollers 310 in the area corresponding to the second stage 332 to first discharge the objects O in the area. Subsequently, the third transfer unit 300 may rotate the third rollers 310 located at the boundary between the first stage 331 and the second stage 332 and/or the area corresponding to the first stage 331 to discharge the remaining objects O.

Accordingly, an embodiment may effectively align and transfer the plurality of objects O. In addition, an embodiment may prevent problems, such as overturning of the objects O, even if the objects O are abnormally aligned during the alignment process.

The operation of the transfer apparatus 10 may be explained below.

The plurality of objects O enter the first transfer unit 100 (FIG. 7). The plurality of objects O may form a plurality of groups. For example, one group may include six objects O and objects O in group 2 may enter the first transfer unit 100 after objects O in group 1 entered the first transfer unit 100. For example, when the objects O in group 1 enters the second transfer unit 200 from the first transfer unit 100, the objects O in group 2 may enter the first transfer unit 100. The objects O in group 1, which entered first, may be misaligned and meander while passing through a plurality of areas. For example, the objects O may meander while passing through a plurality of areas and may be misaligned. Each of the plurality of areas may have rollers for transferring the objects O. These rollers may change to a shape in which center areas of the rollers sag, e.g., concave downward, due to a high temperature environment and/or a weight of the objects O. As a result, a contact state between rollers and the objects O may vary for each area, e.g., central areas and edge areas of the rollers, and a drive transmission power of the rollers may vary depending on the locations of the objects O and the objects O may meander. In addition, as the objects O are transferred, the material contained inside may be tilted and the objects O may be shaken or collide with each other, resulting in meandering. The objects O in group 2 that entered later may also meander. The first transfer unit 100 may control the first driving apparatus 120 so that the plurality of first rollers 110 rotate at the same rotational speed.

In the drawings below, explanations may be made focusing on the objects O in group 1.

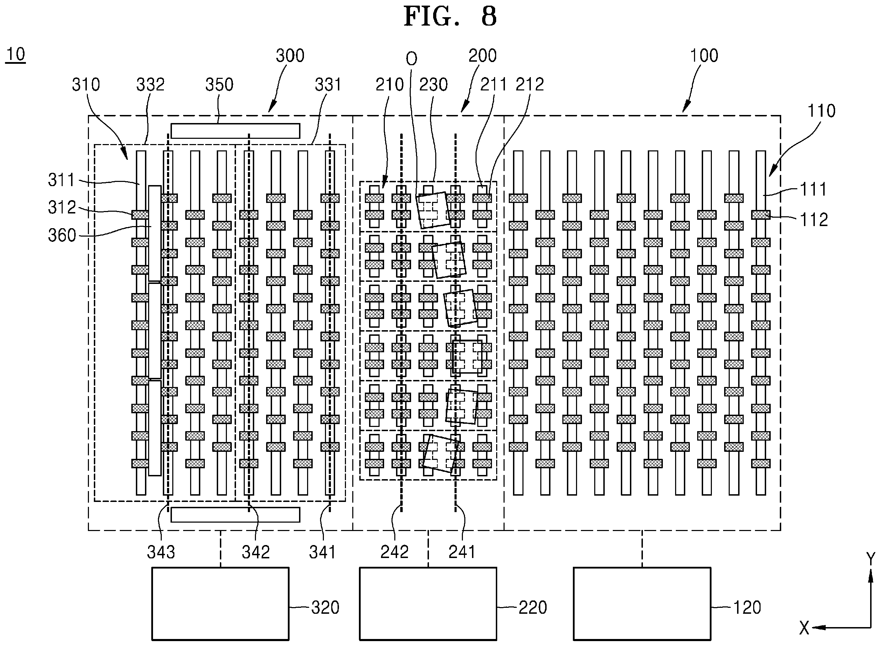

The plurality of objects O in group 1 enter the second transfer unit 200 (FIG. 8). The plurality of objects O included in group 1 may enter the second transfer unit 200 to correspond to the plurality of alignment areas 230, respectively. In this process, the first sensors 241 of the second transfer unit 200 may detect the entry of the objects O in group 1 into the second transfer unit 200. For example, six objects O may enter the six alignment areas 230, respectively. The rotational speed of the plurality of second rollers 210 of the second transfer unit 200 may be the same as the rotational speed of the plurality of first rollers 110.

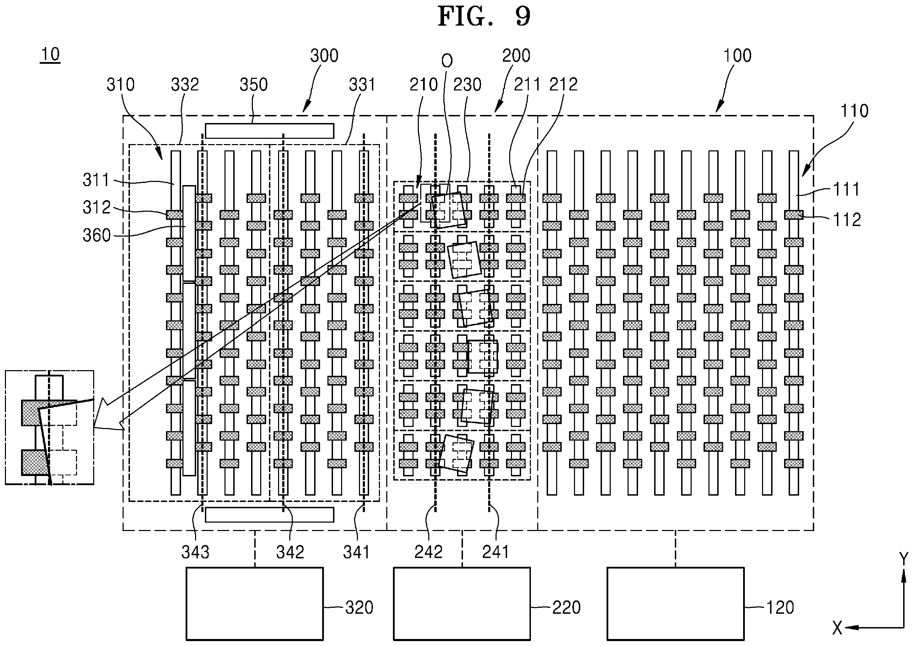

The objects O in group 1 may meander while being transferred by the plurality of second rollers 210 and any one object O may be detected first by the second sensor 242 (FIG. 9). The other objects O may not be detected by the second sensor 242. When one of the second sensors 242 first detects the object O, the second transfer unit 200 may increase the rotational speed of the plurality of second rollers 210 for positional alignment between the plurality of objects O.

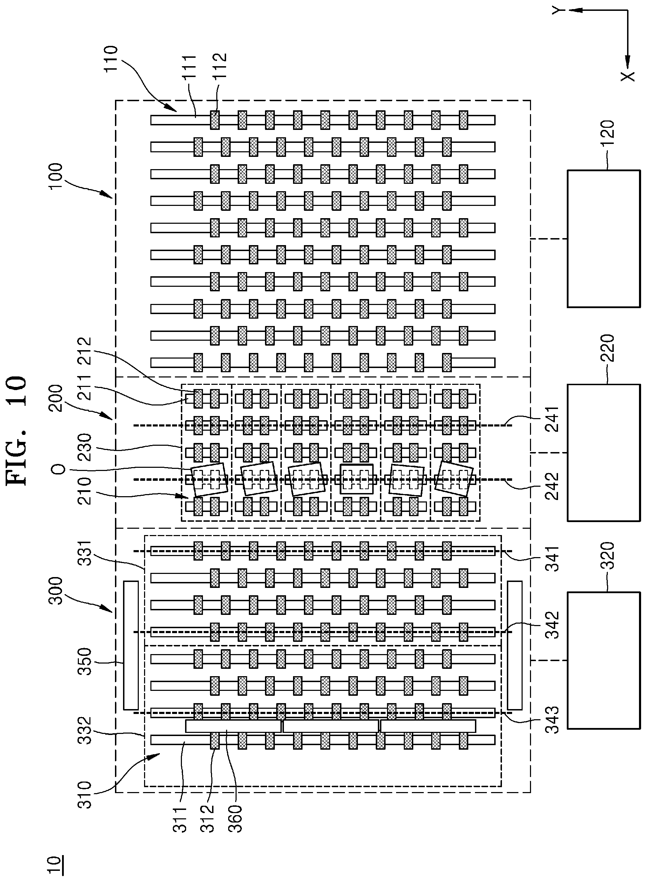

For example, the second transfer unit 200 may increase the rotational speed of the plurality of second rollers 210 in the other alignment areas 230 than the alignment area 230 corresponding to the second sensor 242 that first detected the object O among the plurality of second sensors 242. That is, to align, based on the location of the uppermost object O in the transfer direction of the objects O, the other objects O, the second transfer unit 200 may increase the rotational speed of the plurality of second rollers 210 transferring the other objects O. Accordingly, as shown in FIG. 10, the objects O in group 1 may be aligned and transferred. For example, when increasing the rotational speed of the plurality of second rollers 210, the second transfer unit 200 may increase the rotational speed of the plurality of second rollers 210 provided in the alignment area 230 where the object O is located, which is detected by the first sensor 241 but not yet detected by the second sensor 242.

For example, when the second sensors 242 detect all of the objects O in group 1, the second transfer unit 200 may equally adjust the rotational speed of the plurality of second rollers 210 included in the plurality of alignment areas 230. For example, the second driving apparatuses 220 may individually control the rotational speed of the plurality of second rollers 210 included in the plurality of alignment areas 230.

Additionally, as described above, the plurality of second rollers 210 included in the plurality of alignment areas 230 may have different sizes. As a result, the objects O in group 1 entering the second transfer unit 200 may rotate by the angle set in each alignment area 230. Accordingly, the deviation of the degree of rotation of the object O included in each of the plurality of alignment areas 230 may be minimized, compared to a reference value that does not allow the meandering.

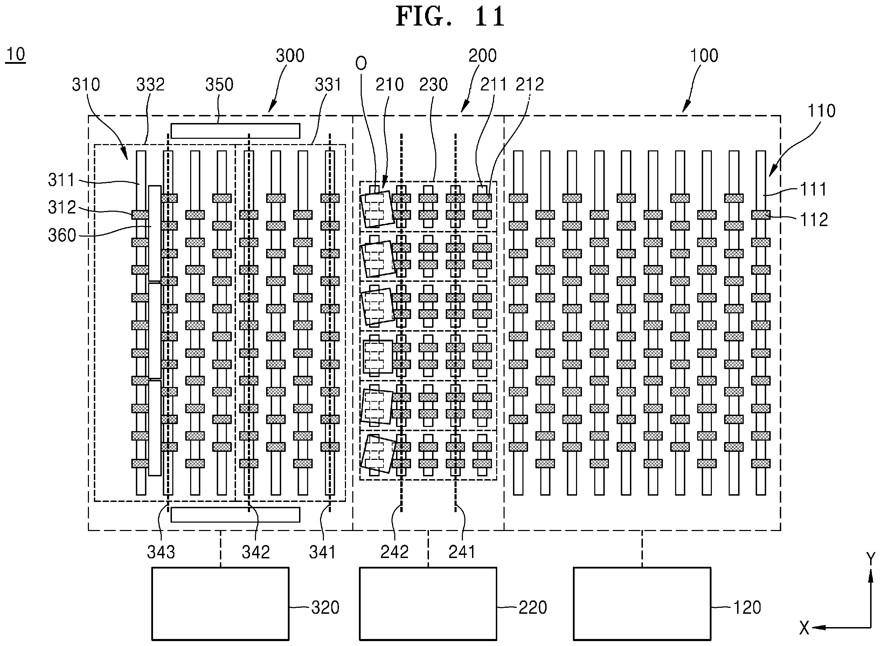

The objects O in group 1 may pass through the second sensors 242 while being first aligned and move to the third transfer unit 300. At this time, the objects O in group 1 that have passed through the second sensors 242 may move at high speed to the areas corresponding to the fifth sensors 343. That is, the second driving apparatuses 220 may adjust the rotational speed of the second rollers 210 in the second transfer unit 200 to a high speed. When the objects O in group 1 moves to the third transfer unit 300, the objects O may not be detected by the second sensors 242. In this case, the second driving apparatuses 220 of the second transfer unit 200 may adjust the rotational speed of the second rollers 210 back to a low speed (FIG. 11).

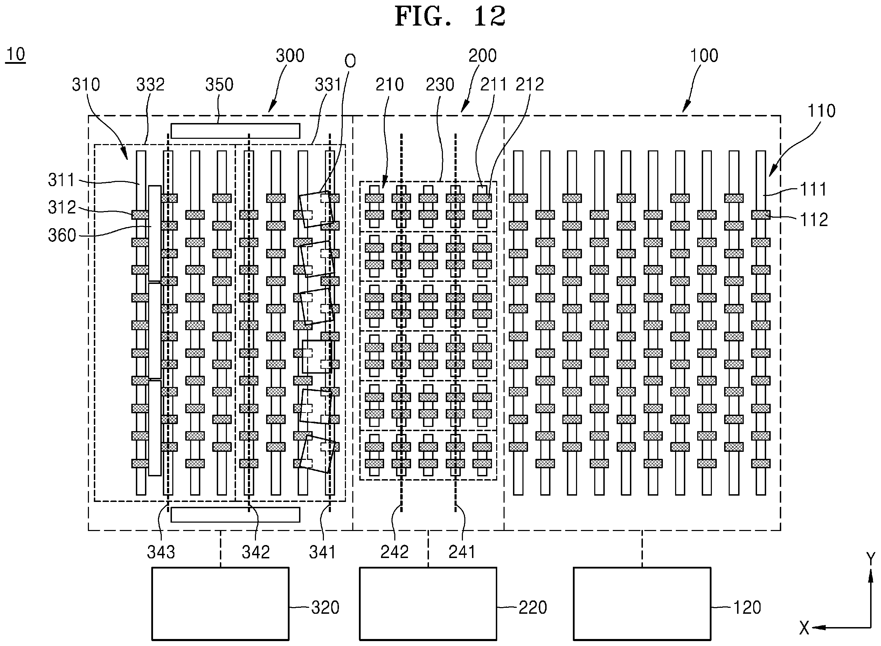

The plurality of objects O in group 1 enter the third transfer unit 300 (FIG. 12). In the third transfer unit 300, the objects O in group 1 may move at high speed to the areas corresponding to the fifth sensors 343. That is, the third driving apparatuses 320 may adjust the rotational speed of the third rollers 310 in the third transfer unit 300 to a high speed. In this process, the third sensors 341 of the third transfer unit 300 may detect the objects O in group 1.

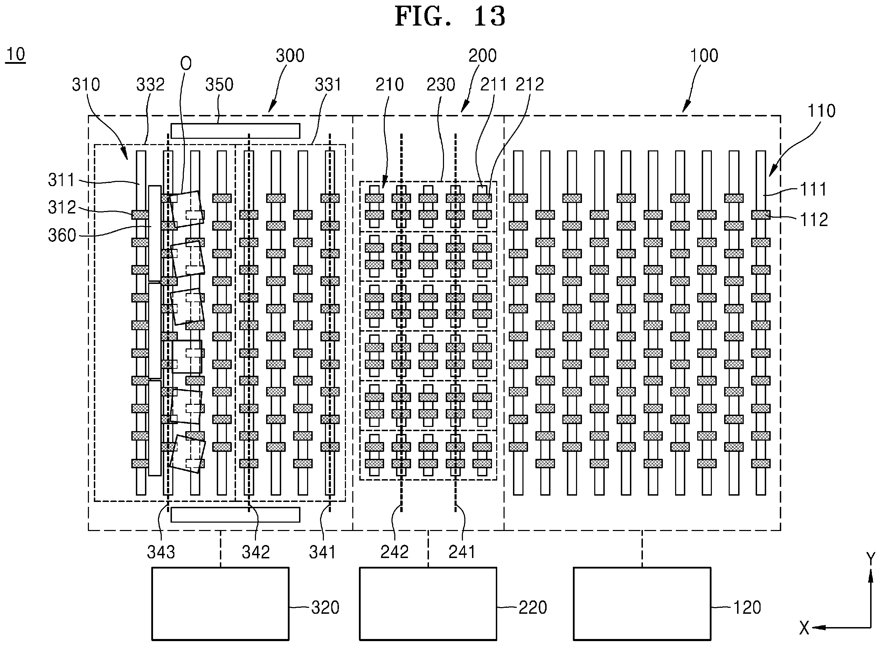

The objects O in group 1 pass through the fourth sensors 342 and at least one object O is detected by the fifth sensor 343 (FIG. 13). The objects O included in group 1 may be moved at high speed to the area in front of the stopper 360, e.g., an area where forward movement is restricted by the stopper 360, by the third rollers 310 of the third transfer unit 300. Accordingly, at least one object O included in group 1 is located in the area in front of the stopper 360 and is detected by the fifth sensor 343.

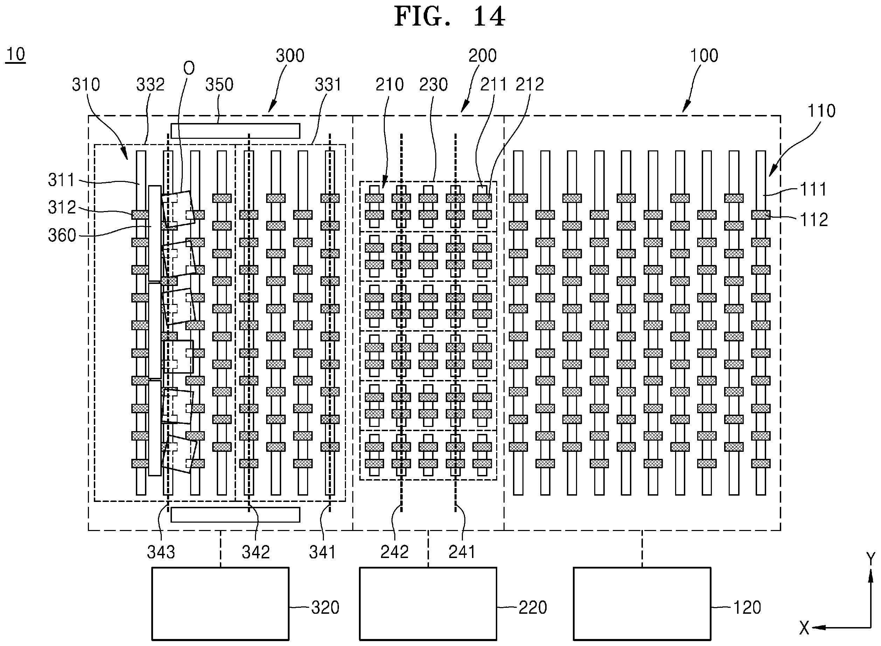

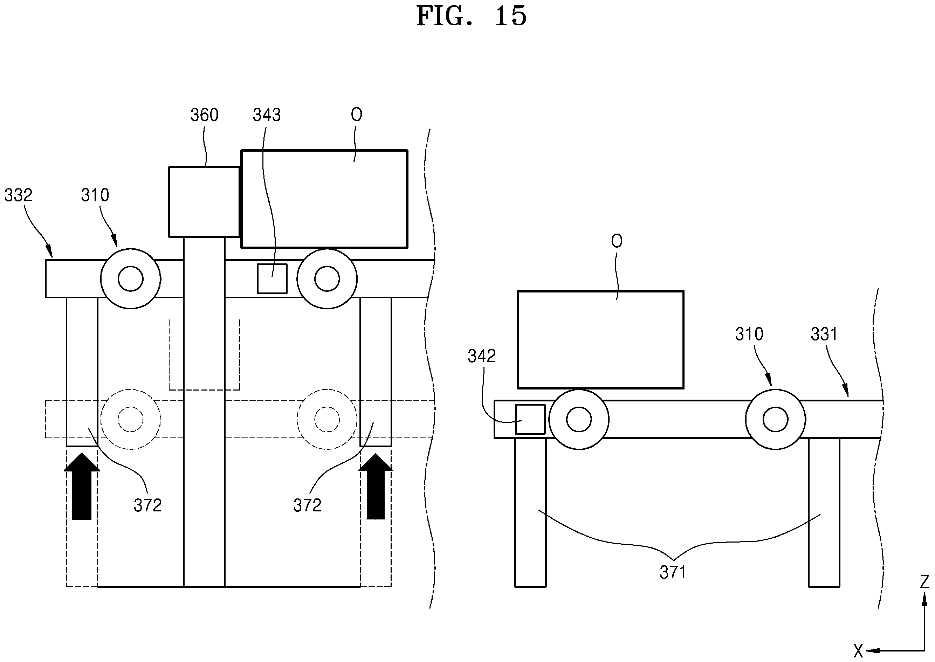

As shown in FIGS. 14 and 15, the objects O in group 1 may be detected by the fifth sensors 343 and may not be detected by the fourth sensors 342. For example, after a certain time has elapsed from the time when the fifth sensors 343 detect the objects O in group 1, the objects O in group 1 may have passed and may not be detected by the fourth sensors 342.

That is, when the fifth sensors 343 detect the objects O and at least one of the fourth sensors 342 does not detect the object O, the third transfer unit 300 may determine that the plurality of objects O included in group 1 have moved normally. In addition, the third transfer unit 300 may control the third driving apparatus 320 to reduce the rotational speed of the plurality of third rollers 310 included in the second stage 332 or to stop the plurality of third rollers 310.

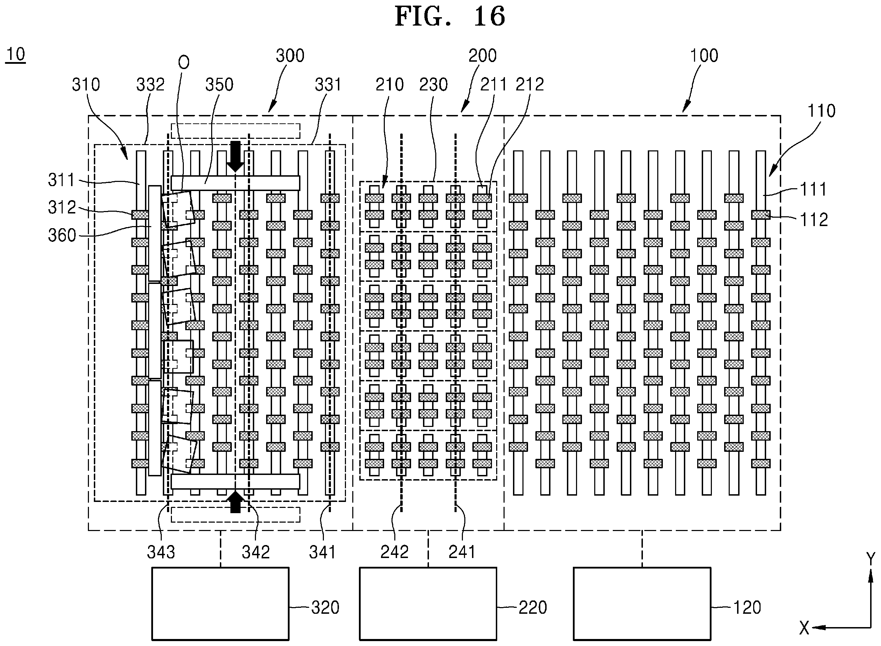

For example, as shown in FIG. 15, when the objects O in group 1 of which movement is restricted by the stopper 360 are all detected by the fifth sensors 343 and a set time has elapsed, the third rollers 310 may be stopped. Thereafter, the second lift 372 may raise the second stage 332 to form a level difference from the first stage 331. In this state, the forward movement of the objects O in group 1 may be restricted by the raised stopper 360. In a state where the second lift 372 rises and the objects O in group 1 are stopped, the pair of centering apparatuses 350 move in the second direction to align the objects O in group 1 (FIG. 16). The pair of centering apparatuses 350 may press the objects O in group 1 in the second direction so that the objects O in group 1 are closely aligned in the second direction.

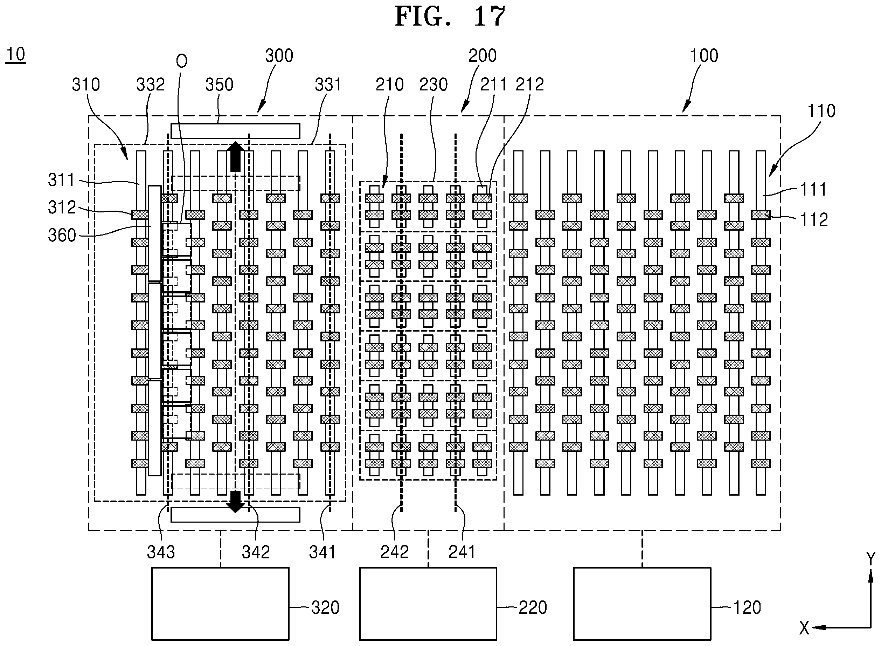

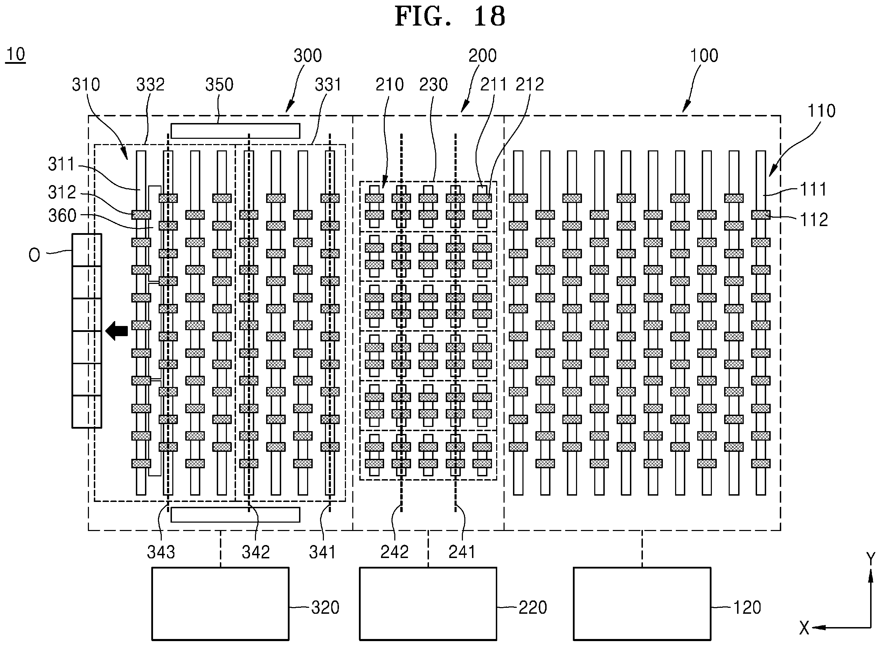

Next, as shown in FIGS. 17 and 18, the stopper 360 may descend and the centering apparatuses 350 may return to their original location. Additionally, the second stage 332 may descend. In addition, by rotating the plurality of third rollers 310 included in the second stage 332 again or returning the same to their original rotational speed, the third transfer unit 300 may discharge the objects O in group 1 to the outside of the electrode material heat treatment apparatus 1.

For example, the objects O in group 1 may be detected by the fifth sensors 343 and the fourth sensors 342. For example, even after a certain time has elapsed from the time the fifth sensors 343 detect the objects O in group 1, some of the objects O in group 1 may be detected by the fourth sensors 342 when they fail to move the set distance. That is, both of the fourth sensors 342 and the fifth sensors 343 detect the objects O, the third transfer unit 300 may determine that the plurality of objects O included in group 1 are misaligned.

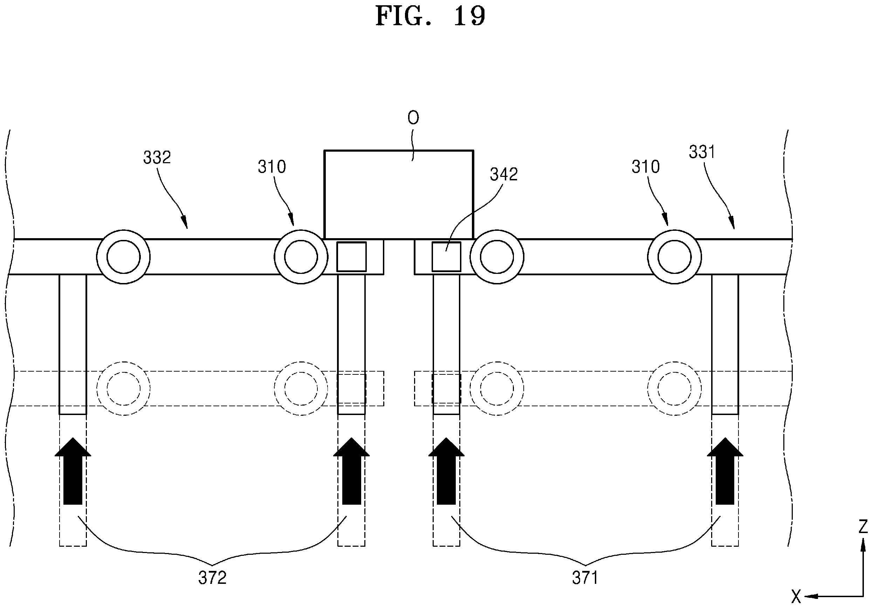

For example, as shown in FIG. 19, at least one object O in group 1 may be located in the boundary area between the first stage 331 and the second stage 332 or may remain in the first stage 331. In this case, when only the second stage 332 rises, the objects O located in the boundary area between the two stages 331 and 332 may overturn. To prevent this, both the first stage 331 and the second stage 332 may be raised to prevent overturning.

For example, the third transfer unit 300 may control the third driving apparatus 320 to stop the plurality of third rollers 310 included in the first stage 331 and the second stage 332. Thereafter, the first lift 371 and the second lift 372 may raise the first stage 331 and the second stage 332, respectively. In this state, the forward movement of the objects O in group 1 may be restricted by the raised stopper 360.

In a state where the objects O in group 1 are stopped, the pair of centering apparatuses 350 may move in the second direction to align the objects O in group 1. The pair of centering apparatuses 350 may press the objects O in group 1 in the second direction so that the objects O in group 1 are closely aligned in the second direction.

For example, the centering apparatuses 350 may be located in areas corresponding to portions of the second stage 332 and the first stage 331. Accordingly, the centering apparatuses 350 may align the objects O located on the second stage 332 by pressing the same in the second direction. In addition, the centering apparatuses 350 may press and align the objects O located at the boundary between the first stage 331 and the second stage 332 or located on the first stage 331 corresponding to the centering apparatuses 350.

The stopper 360 may descend and the centering apparatuses 350 may return to their original location. Additionally, the first stage 331 and the second stage 332 may descend. The third transfer unit 300 may rotate the third rollers 310 in the area corresponding to the second stage 332 to first discharge the objects O in the area. Subsequently, the third transfer unit 300 may rotate the third rollers 310 located at the boundary between the first stage 331 and the second stage 332 and/or the area corresponding to the first stage 331 to discharge the remaining objects O.

Although not shown in the drawings, the objects O in group 2 may be transferred at low speed from the first transfer unit 100 toward the second transfer unit 200 in the process of aligning the objects O in group 1. In addition, the objects O in group 2 may be transferred to the second transfer unit 200 after completing the alignment of the objects O in group 1 and discharging the same from the third transfer unit 300 and may be aligned like the objects O in group 1 through the above-mentioned process.

Alternatively, the objects O in group 2 may be transferred to the second transfer unit 200 during the process in which the objects O in group 1 are aligned. The objects O in group 2 may enter the second transfer unit 200 according to the time when the set operation for the objects O in group 1 is performed. The set operation may include one of pressurizing operation, stage lowering operation, and stopper 360 lowering operation but is not limited thereto and may vary depending on the number and size of objects O and the alignment speed of the second and third transfer units 200 and 300. For example, when the objects O in group 1 enter the third transfer unit 300 from the second transfer unit 200, the objects O in group 2 may enter the second transfer unit 200 from the first transfer unit 100. For example, when the third sensors 341 of the third transfer unit 300 detect the objects O in group 1, the objects O in group 2 may enter the second transfer unit 200 from the first transfer unit 100.

The transfer apparatus 10 according to an embodiment may individually control the rotational speed of a plurality of rollers that transfer the plurality of objects O to align the plurality of meandering objects O.

The transfer apparatus 10 according to an embodiment may individually control the rotational speed of the plurality of second rollers 210 in the plurality of alignment areas 230 of the second transfer unit 200 by using the plurality of second driving apparatuses 220 provided in the same number as the plurality of objects O.

The transfer apparatus 10 according to an embodiment may set a diameter difference in the rotating members 212 of the plurality of second rollers 210 provided in the second transfer unit 200 to prevent interference and collision between the objects O.

The transfer apparatus 10 according to an embodiment may effectively align the plurality of objects O and may prevent the objects O from overturning although at least one object O is misaligned during the alignment process.

As such, the present disclosure is explained with reference to embodiments shown in the drawings but this is only an example. Those skilled in the art can fully understand that various modifications and equivalent other embodiments are possible from the embodiments. Therefore, the true scope of technical protection of the present disclosure may have to be determined based on the attached claims.

### Industrial Applicability

The present disclosure can be applied to industries related to a transfer apparatus and an electrode material heat treatment apparatus including the same.

## Claims

1. A transfer apparatus comprising:
a first transfer unit comprising a plurality of first rollers and a first driving apparatus configured to drive the plurality of first rollers and into which a plurality of objects are introduced;
a second transfer unit comprising a plurality of second rollers, a plurality of alignment areas formed on the plurality of second rollers in the same number as the plurality of objects, and a plurality of second driving apparatuses configured to drive the plurality of second rollers; and
a third transfer unit comprising a plurality of third rollers and a third driving apparatus configured to drive the plurality of third rollers, and discharging the plurality of objects;
wherein the second transfer unit individually controls rotational speeds of the plurality of second rollers by using the plurality of second driving apparatuses, thereby individually controlling the transfer speeds of the plurality of objects transferred in the plurality of alignment areas.

2. The transfer apparatus of claim 1, wherein the second transfer unit
comprises a plurality of first sensors and a plurality of second sensors, located in the plurality of alignment areas, respectively, in a first direction, and
when the second sensor in one of the alignment areas detects the objects, the second transfer unit increases the rotational speeds of the plurality of second rollers in the other alignment areas where the first sensors detect the objects and the second sensors do not detect the objects.

3. The transfer apparatus of claim 2, wherein, when the second sensor in the alignment area corresponding to the plurality of second rollers with increased rotational speed detects the objects, the second transfer unit lowers the rotational speed of the plurality of second rollers in the alignment area.

4. The transfer apparatus of claim 1, wherein the plurality of second rollers operate independently from the first driving apparatus of the first transfer unit.

5. The transfer apparatus of claim 1, wherein each second roller included in the plurality of alignment areas comprises a pair of rotating members, and a diameter of an outer rotating member is less than a diameter of an inner rotating member among the pair of rotating members.

6. The transfer apparatus of claim 1, wherein the third transfer unit comprises
a first stage that has some of the plurality of third rollers and can be raised and lowered;
a second stage that has others of the plurality of third rollers and can be raised and lowered;
a fourth sensor on the first stage adjacent to the boundary between the first stage and the second stage; and
a fifth sensor on the second stage,
wherein the first stage is located between the second transfer unit and the second stage.

7. The transfer apparatus of claim 6, wherein, when the fifth sensor detects the objects and the fourth sensor does not detect the objects, the third transfer unit raises the second stage after a set time.

8. The transfer apparatus of claim 6, wherein, when the fourth sensor and the fifth sensor simultaneously detect the objects, the third transfer unit raises the first stage and the second stage after a set time.

9. The transfer apparatus of claim 6, wherein the third transfer unit further comprises centering apparatuses on both sides of the plurality of third rollers, and the centering apparatuses press the objects in a direction crossing a transfer direction of the object.

10. An electrode material heat treatment apparatus, comprising a plurality of areas through which objects sequentially pass, wherein the plurality of areas comprise:
a preheating area configured to preheat the objects;
a heating area located behind the preheating area and configured to heat the objects to a set temperature;
a maintaining area located behind the heating area and configured to maintain a temperature corresponding to the heating area;
a cooling area located behind the maintaining area and configured to cool the objects; and
an alignment area located behind the cooling area and configured to align the objects, wherein the alignment area comprises a transfer apparatus according to any one of claims 1 to 9.
